# EUROPÄISCHE PATENTSCHRIFT

(11) **EP 2 734 565 B1**
(45) Veröffentlichungstag und Bekanntmachung des Hinweises auf die Patenterteilung: **30.12.2015**
(21) Anmeldenummer: 12737551.7
(22) Anmeldetag: 19.07.2012
(51) Int. Cl.: C08G 18/40, C08G 18/42, C08J 9/14

(54) **PUR-PIR-HARTSCHAUMSTOFF MIT VERBESSERTER HAFTUNG IN VERBUNDELEMENTEN**
RIGID PU-PIR FOAM WITH IMPROVED ADHESION IN COMPOSITE ELEMENTS
MOUSSE DURE DE PUR-PIR À ADHÉRENCE AMÉLIORÉE DANS DES ÉLÉMENTS COMPOSITES

(30) Priorität: 22.07.2011 DE 102011079651
(43) Veröffentlichungstag der Anmeldung: 28.05.2014
(73) Patentinhaber: Covestro Deutschland AG, 51373 Leverkusen (DE)
(72) Erfinder: ABELS, Rene, 51061 Köln (DE); HAGEN, Torsten, 45257 Essen (DE); ROERS, Rolf, 51519 Odenthal (DE)
(74) Vertreter: Levpat
(86) Internationale Anmeldenummer: PCT/EP2012/064159
(87) Internationale Veröffentlichungsnummer: WO 2013/014055

(56) Entgegenhaltungen:
- EP-A1- 0 821 019
- WO-A1-2007/025886
- WO-A1-2007/025888

## Beschreibung

Die vorliegende Erfindung betrifft ein Verfahren zur Herstellung eines Polyurethan-Polyisocyanurat-Hartschaumstoffs durch Verschäumung einer Polyol-Zusammensetzung umfassend wenigstens ein Ester-Polyetherpolyol, erhältlich durch Umsetzung wenigstens eines Dicarbonsäureäquivalents mit wenigstens einem mehrwertigen Alkohol, und Alkoxylierung des erhaltenen Umsetzungsproduktes mit wenigstens einem Epoxid, mit einer Isocyanatkomponente in Gegenwart einer speziellen Treibmittelmischung.

Die Erfindung betrifft weiterhin ein nach dem erfindungsgemäßen Verfahren erhältlichen Polyurethan-Polyisocyanurat-Hartschaumstoff, dessen in der Herstellung von Deckschicht-Hartschaum-Sandwichelementen sowie die erhaltenen Sandwichelemente.

Unter einem Sandwichelement oder, synonym, einem Sandwich-Verbundelement wird ein Verbundelement verstanden, welches wenigstens aus zwei Deckschichten und einer dazwischen liegenden Kernschicht aufgebaut ist. Im Besonderen bestehen Metall-Schaumstoff-Verbundelemente wenigstens aus zwei Deckschichten aus Metall und einer Kernschicht aus einem Schaumstoff, zum Beispiel einem Polyurethan (PUR)-Hartschaumstoff. Derartige Metall-Schaumstoff-Verbundelemente auf Basis von Metalldeckschichten und einer Kernschicht aus Polyurethan-Hartschaumstoff sind aus dem Stand der Technik hinlänglich bekannt und werden auch als Metallverbundelemente bezeichnet. Zwischen der Kernschicht und den Deckschichten können weitere Schichten vorgesehen sein. Beispielsweise können die Deckschichten, zum Beispiel mit einem Lack, beschichtet sein.

Beispiele für die Anwendung solcher Metallverbundelemente sind ebene oder linierte Wandelemente sowie profilierte Dachelemente für den Industriehallenbau und Kühlhausbau. Auch finden die Metallverbundelemente als LKW-Aufbauten, Hallentüren und Tore sowie im Containerbau Einsatz.

Die Herstellung dieser Metallverbundelemente nach einem kontinuierlichen oder diskontinuierlichen Verfahren ist aus dem Stand der Technik hinlänglich bekannt. Vorrichtungen zur kontinuierlichen Herstellung sind zum Beispiel in DE 1 609 668 A oder DE 1 247 612 A beschrieben.

Ferner ist für Metallverbundelemente bekannt, vor dem Ausschäumen der Kernschicht auf die Deckschichten chemische Komponenten wie Haftvermittler, Bindemittel, Harze oder dergleichen zur Erhöhung der Haftung des Schaumstoffs auf den Metalldeckschichten aufzubringen. Dies gilt insbesondere für Metallverbundelemente, die aus Polyisocyanurat-modifizierten Schaumkernen, sogenannten PUR/PIR-Schäumen, bestehen, da bei derartigen Schäumen das Haftvermögen im Vergleich zu herkömmlichen Polyurethanschäumen (PUR-Schäumen) deutlich vermindert ist. Neben der unzureichenden Haftung der Kernschicht auf den Deckschichten besteht ein weiteres Problem darin, dass in Grenzbereichen der Schaumstoff-Kernschicht nahe den Deckschichten Störungen im Schaumstoff, in der Regel in Form von Blasen oder veränderten Zellstrukturen, auftreten. Diese Störungen im Schaumstoff können die Einsatzfähigkeit der Metallverbundelemente einschränken und sind daher unerwünscht. Sie können jedoch durch einen Haftvermittler, der auf die Deckschichten aufgetragen wird, reduziert oder ganz vermieden werden.

Üblicherweise werden solche Haftvermittler zum Beispiel mittels Düsen, Tropfleisten, Harken oder Drehtellern in Form von Tropfen oder Fäden aufgebracht oder durch Bestreichen der Deckschichten mittels Bürsten, Pinsel, Walzen, etc. aufgetragen.

Es ist allgemein bekannt, dass der Auftrag der Haftvermittler bei der Herstellung von Metallverbundelementen in der Regel nur auf die untere Deckschicht erfolgt, da diese bei der späteren Verbauung die nach außen gerichtete Sichtseite darstellt und hier die Anforderungen an die Haftfestigkeit noch höher sind als bei der Elementoberseite. Die Elementunterseite ist beispielsweise durch Witterungseinflüsse ständig wechselnden Temperaturen ausgesetzt, wodurch sich auch kleine Schaumstörstellen in der Grenzschicht zwischen Schaum und Deckschicht zu Blasen auswachsen können, die im Extremfall zum kompletten Ablösen der Deckschicht führen können. Die Elementoberseite ist, sofern das Element als Außenwand eines Gebäudes dient, derartigen Klimabelastungen nicht ausgesetzt. Nichtsdestotrotz müssen auch die oberen Deckschichten bestimmte Anforderungen hinsichtlicht der Haftfestigkeit erfüllen.

So erfolgt beispielsweise bei der kontinuierlichen Herstellung der Metallverbundelemente unmittelbar nach dem Austritt der Elemente aus der Produktionsanlage der Sägeschnitt, bei dem das Element auf die gewünschte Länge konfektioniert wird. Hierbei wird durch die Säge eine erhebliche mechanische Belastung auf das Element und damit auch auf den Verbund von Schaum und Deckschicht ausgeübt, so dass sich ohne eine ausreichende Haftfestigkeit die Deckschicht vom Schaum löst.

Das Haftungsvermögen des Schaums wird allerdings nicht nur durch dessen chemische Natur bestimmt sondern auch maßgeblich durch die Beschaffenheit und Reinheit der Deckschichtoberfläche und auch, sofern vorhanden, durch die Art und Qualität der Deckschichtlackierung. Verunreinigungen auf der Deckschicht oder Schwankungen in der Qualität der Lackierung können das Haftvermögen des Schaums erheblich vermindern.

Weiterhin ist allgemein bekannt, dass bei Metallverbundelementen mit einem Kern aus PUR/PIR-Schaum die Haftung zwischen Schaum und Deckschichten mit steigender Temperatur zunimmt. Unter anderem aus diesem Grund werden daher Metallverbundelemente mit PUR/PIR-Schaumkern bei Maschinentemperaturen von ca. 60 °C oder mehr hergestellt, während Elemente mit PUR-Schaumkernen bei Anlagentemperaturen von ca. 40-50 °C produziert werden. Verständlicherweise erfordert eine höhere Maschinentemperatur einen höheren Energieeinsatz und verursacht daher höhere Produktionskosten. Ferner bedeutet eine höhere Maschinentemperatur eine längere Aufheizphase der Anlage nach einem Produktionsstillstand oder nach einem Produktwechsel, falls vorher Metallverbundelemente hergestellt wurden, die bei niedrigerer Anlagentemperatur produziert werden können. Es besteht somit die Gefahr, dass die Anlage noch nicht ihren Gleichgewichtszustand erreicht hat und nicht an allen Stellen die erforderliche Produktionstemperatur herrscht, aber trotzdem die reguläre Produktion aufgenommen wird. Die Folge wären Metallverbundelemente mit verminderter Qualität durch schlecht haftende, insbesondere nicht mit Haftvermittler versehene, obere Deckschichten.

WO 2007/025888 A1 beschäftigt sich unter anderem damit, die Schaumoberfläche von Polyisocyanurat-Hartschaumstoffen zu verbessern und gleichzeitig die Häufigkeit von Oberflächendefekten zu verringern. Eingesetzt werden dabei auch Ameisensäure-getriebene Systeme. In einem Verfahren zur Herstellung von Polyisocyanurat-Hartschaumstoffen durch Umsetzung von Isocyanaten mit Verbindungen mit gegenüber Isocyanaten reaktiven Gruppen, Treibmittel enthaltend Ameisensäure, einem Katalysatorsystem und eventuell Schaumstabilisatoren, Flammschutzmittel und sonstigen Zusatzstoffen enthält das Katalysatorsystem i) mindestens eine Verbindung der Struktur: R¹-N(CH₃)-CH₂-CH₂-O-R², wobei R¹ für CH³, CH²-CH₂-N(CH₃)₂ oder CH₂-CH₂OH, und R² für H, CH₂-CH₂OH oder CH₂-CH₂N(CH₃)₂ steht, und ii) mindestens einen Trimerisierungskatalysator.

Der Einsatz von Polyetherestern in PU-Hartschäumen wird zum Beispiel in DE 196 302 83 A1 beschrieben. Ein Verfahren zur Herstellung von Polyurethanhartschaumstoffen durch Umsetzung von organischen und/oder modifizierten organischen Di- und/ oder Polyisocyanaten mit speziellen Polyesterpolyolen und/oder Polyetheresterpolyolen, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, sowie gegebenenfalls weiteren höhermolekularen Verbindungen mit mindestens zwei reaktiven Wasserstoffatomen und gegebenenfalls niedermolekularen Kettenverlängerungs- und/oder Vernetzungsmitteln in Gegenwart von Treibmitteln, Katalysatoren sowie gegebenenfalls weiteren Hilfsmitteln und/oder Zusatzstoffen zeichnet sich dadurch aus, dass die Herstellung der Polyesterpolyole und/oder Polyetheresterpolyole in einer stufenweisen Polykondensation erfolgt, wobei neben den Ausgangskomponenten in der ersten Stufe Polyalkylenterephthalat in die beginnende und/oder laufende Kondensation eingetragen wird und in mindestens einer weiteren Stufe katalytisch wirksame Substanzen zugegeben werden. Weitere Beispiele für Patentanmeldungen, die mit Ameisensäure getriebene Systeme allgemein erwähnen, sind DE 10 145 458 A1 oder EP 1 293 524 A1.

Dokument EP 0 821 019 A1 offenbart im Beispiel 10 ein Verfahren zur Herstellung von Polyurethanhartschaumstoffen durch Umsetzung eines Polyetheresterols auf Basis Phthalsäureanhydrid, Diethylenglykol, PET und Ethylenoxid mit einem Polyisocyanat. Als Treibmittel wird eine Mischung aus Wasser und einem physikalischen Treibmittel (R141b) verwendet.

Wünschenswert wäre demzufolge ein PUR/PIR-Schaum mit verbesserter Haftung zur Metalldeckschicht, um sicher qualitativ hochwertige Verbundelemente herstellen zu können, auch wenn auf die Deckschicht kein Haftvermittler aufgebracht wird.

Aufgabe der vorliegenden Erfindung war daher, ein PUR/PIR-Schaumsystem zu entwickeln, das eine verbesserte Haftung zur Metalldeckschicht in Metall-Hartschaum-Verbundelementen besitzt.

Die erfindungsgemäße Aufgabe wird gelöst durch ein Verfahren zur Herstellung eines Polyurethan-Polyisocyanurat-Hartschaumstoffs **C** durch Verschäumung
(i) einer Polyol-Zusammensetzung **A1** umfassend wenigstens ein Ester-Polyetherpolyol **A1a** mit einer Hydroxylzahl (DIN 53240) zwischen 200 mg KOH/g und 500 mg KOH/g und einer durchschnittlichen OH-Funktionalität zwischen 1,5 und 4,0, erhältlich durch
   a1) Umsetzung wenigstens eines Dicarbonsäureäquivalents mit wenigstens einem mehrwertigen Alkohol, und
   b1) Alkoxylierung des in a1) erhaltenen Umsetzungsproduktes mit wenigstens einem Epoxid
   mit
(ii) einer Isocyanatkomponente **B,**
   in Gegenwart von
(iii) einer Treibmittelkomponente **A2** umfassend
   a2) Ameisensäure in einem molaren Anteil zwischen ≥ 5 mol-% und ≤ 40 mol-%,
   b2) physikalische Treibmittel in einem molaren Anteil zwischen ≥ 50 mol-% und ≤ 85 mol-%,
   c2) Wasser in einem molaren Anteil zwischen > 5 mol-% und ≤ 45 mol-%,
   wobei der molare Anteil von a2), b2) und c2) jeweils auf 100 mol-% **A2** bezogen ist,
(iv) wenigstens eines Katalysators **A3** und
(v) wenigstens eines Schaumstabilisators **A4.**

Es wurde gefunden, dass sich bei Verwendung spezieller Ester-Polyetherpolyole in Kombination mit Ameisensäure PUR/PIR-Hartschaumstoffe herstellen lassen, die in Sandwichelementen eine deutlich verbesserte Haftung zur Deckschicht aufweisen, als das ohne Anwesenheit von Ameisensäure der Fall wäre

Das Dicarbonsäureäquivalent zur Herstellung des Ester-Polyetherpolyols **A1a** kann beispielsweise eine Dicarbonsäure oder ein Dicarbonsäureanhydrid sein. Beispiele hierfür sind Adipinsäure, Maleinsäure, Fumarsäure, Phthalsäure, Terephthalsäure, Isophthalsäure, Tetrahydrophthalsäure, halogenierte Phthal- und Tetrahydrophthalsäuren sowie deren Derivate. Bevorzugte Carbonsäuren sind Adipinsäure, Maleinsäure, Fumarsäure, beziehungsweise deren Derivate, besonders bevorzugt sind Phthalsäure, Terephthalsäure und Isophthalsäure beziehungsweise deren Derivate. Insbesondere sind bevorzugte Carbonsäure-Derivate deren Carbonsäureanhydride.

Als Alkoholkomponente zur Herstellung des Ester-Polyetherpolyols **A1a** kommen Glykole wie Ethylenglykol, Diethylenglykol, Triethylenglykol, Tetraethylenglykol, 1,2-Propandiol, 1,3-Propandiol, 1,4-Butandiol, 3-Methyl-1,5-Pentandiol, 1,5-Pentandiol, Hexandiol, 1,10-Decandiol, Glycerin, Trimethylolpropan, Pentaerythrit, Sorbit oder Saccharose beziehungsweise Mischungen daraus zum Einsatz. Bevorzugt werden Ethylenglykol und Diethylenglykol verwendet.

Im Anschluss an die Esterbildung folgt in bekannter Weise die Umsetzung mit Alkylenoxiden wie Ethylenoxid oder Propylenoxid zum Ester-Polyetherpolyol. Die Alkylenoxide können dabei nacheinander, im Gemisch oder in beliebigen Abfolgen mit dem Polyester zur Reaktion gebracht werden.

Vorzugsweise weisen die Ester-Polyetherpolyole **A1a** eine durchschnittliche OH-Funktionalität von ≥ 2,0 bis ≤ 3,0 und eine OH-Zahl (DIN 53240) von ≥ 350 mg KOH/g bis ≤ 450 mg KOH auf.

Besonders bevorzugt werden die Ester-Polyetherpolyole **A1a** aus der Reaktion von Phthalsäureanhydrid, Diethylenglykol und Ethylenoxid erhalten. Als Katalysatoren können ethoxylierte Amine eingesetzt werden. Diese Katalysatoren können im Ester-Polyetherpolyol verbleiben.

Neben dem Ester-Polyetherpolyol **A1a** kann die Polyolkomponente weitere Verbindungen mit gegenüber Isocyanatgruppen reaktiven Wasserstoffatomen enthalten, die keine Polyesterether sind, beispielsweise Polyetherpolyole oder niedermolekulare Kettenverlängerer oder Vernetzer. Diese Zusätze können eine Verbesserung der Fliessfähigkeit des Reaktionsgemisches und der Emulgierfähigkeit der treibmittelhaltigen Formulierung auf kontinuierlich produzierenden Anlagen, auf welchen Elemente mit flexiblen oder starren Deckschichten hergestellt werden, bewirken. Bevorzugt werden hierbei Verbindungen eingesetzt, welche eine durchschnittliche OH-Funktionalität von ≥ 1,8 bis ≤ 5,0, eine OH-Zahl von ≥ 20 mg KOH/g bis ≤ 500 mg KOH/g (DIN 53240) und gegebenenfalls primäre OH-Gruppen aufweisen.

Beispiele für eine geeignete Isocyanatkomponente **B** sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist hierbei ein Isocyanat aus der Diphenylmethandiisocyanatreihe, insbesondere Mischungen aus Isomeren des Diphenylmethandiisocyanats (MDI) und dessen Oligomeren. Solche Mischungen werden allgemein als polymeres MDI bezeichnet.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

In der Treibmittelkomponente **A2** wird soviel physikalisches und chemisches Treibmittel eingesetzt, wie zur Erzielung einer dimensionsstabilen Schaummatrix und gewünschten Rohdichte nötig ist. Die Ameisensäure a2 kann direkt der Polyolkomponente zugegeben werden oder während der Produktion als Additiv dem Polyolstrom zugeführt werden, bevor dieser im Mischkopf mit dem Isocyanat zusammentrifft. Die Ameisensäure kann in reiner Form oder als mit Wasser verdünnte Lösung eingesetzt werden. Bevorzugt kommt eine ≥ 85%ige bis ≤ 99%ige Ameisensäure zum Einsatz. Die Mengen an zugesetzter Ameisensäure, berechnet als reine Ameisensäure, betragen in der Regel ≥ 0,5 bis ≤ 5, bevorzugt ≥ 1 bis ≤ 3 Gewichts-%, bezogen auf die Gesamtmenge an Verbindungen mit gegenüber Isocyanatgruppen reaktiven Wasserstoffatomen in der Polyolkomponente.

Als Treibmittel b2 können Kohlenwasserstoffe, zum Beispiel die Isomeren des Pentans, oder Fluorkohlenwasserstoffe, zum Beispiel HFC 245fa (1,1,1,3,3-Pentafluorpropan), HFC 365mfc (1,1,1,3,3-Pentafluorbutan) oder deren Mischungen mit HFC 227ea (Heptafluorpropan), verwendet werden. Es können auch verschiedene Treibmittelklassen kombiniert werden.

Als weiteres chemisches Treibmittel wird Wasser c2 eingesetzt, bevorzugt in einer Menge bis 4 Gewichts-%, besonders bevorzugt ≥ 0,5 bis ≤ 2 Gewichts-%, bezogen auf die Gesamtmenge an Verbindungen mit gegenüber Isocyanatgruppen reaktiven Wasserstoffatomen in der Polyolkomponente.

Der Polyolkomponente werden in der Polyurethanchemie übliche Katalysatoren **A3** zugesetzt. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass zum Beispiel auf kontinuierlich produzierenden Anlagen Elemente mit starren oder flexiblen Deckschichten mit Geschwindigkeiten bis zu 60 m/min je nach Elementstärke produziert werden können.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Bevorzugte Katalysatoren sind Kaliumacetat, Dimethylcyclohexylamin (DMCHA) und Pentamethyldiethylentriamin (PMDETA). Besonders bevorzugt ist eine Mischung dieser drei Katalysatoren. Wird ein Ester aus Phthalsäureanhydrid und Diethylenglykol mit einer OH-Zahl von ≥ 790 mg KOH/g bis ≤ 800 mg KOH/g und einer Säurezahl von ≥ 90 mg KOH/g bis ≤ 110 mg KOH/g (DIN 53240) hinzugesetzt, kann eine größere Menge an Katalysator zugeben werden zur Verbesserung der Schaumeigenschaften. Würde man diese Komponente nicht hinzugeben, wäre die Aktivität des Schaumsystems bei gleicher Katalysatormenge höher, gegebenenfalls auch zu hoch.

Als Schaumstabilisatoren **A4,** die ebenfalls der Polyolkomponente zugesetzt werden, kommen vor allem Polyethersiloxane in Frage. Diese Verbindungen sind im Allgemeinen so aufgebaut, dass ein Copolymerisat aus Ethylenoxid und Propylenoxid mit einem Polydimethylsiloxanrest verbunden ist.

Der Polyolkomponente können weiterhin Flammschutzmittel zugesetzt werden, bevorzugt in einer Menge von ≥ 10 Gewichts-% bis ≤ 45 Gewichts-% bezogen auf die Gesamtmenge an Verbindungen mit gegenüber Isocyanatgruppen reaktiven Wasserstoffatomen in der Polyolkomponente. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Polyole oder Phosphorverbindungen wie die Ester der Orthophosphorsäure und der Metaphosphorsäure, die ebenfalls Halogen enthalten können, sein. Bevorzugt werden bei Raumtemperatur flüssige Flammschutzmittel gewählt.

Selbstverständlich können noch weitere übliche Hilfs- und Zusatzstoffe wie Füllstoffe und dergleichen eingesetzt werden.

Die vorliegende Erfindung wird nachfolgend im Zusammenhang mit weiteren Aspekten und Ausführungsformen näher beschreiben. Sie können beliebig miteinander kombiniert werden, sofern sich nicht aus dem Zusammenhang eindeutig das Gegenteil ergibt.

In einer Ausführungsform des Verfahrens beträgt der Massenanteil der Summe aller Ester-Polyetherpolyole **A1a** ≥ 30 Massen-% bis ≤ 100 Massen-%, bezogen auf die Gesamtmasse von **A1.** Bevorzugte Gehalte sind ≥ 30 Massen-% bis ≤ 80 Massen-%, besonders bevorzugt ≥ 35 Massen-% bis ≤ 65 Massen-%.

Eine bevorzugte Polyolkomponente **A1** umfasst:
≥ 30 Massen-% bis ≤ 80 Massen-%, insbesondere > 35 Massen-% bis ≤ 65 Massen-% eines Polyesterethers **A1a** mit einer OH-Zahl von ≥ 290 mg KOH/g bis ≤ 310 mg KOH/g (DIN 53240), hergestellt durch Veresterung von Phthalsäureanhydrid mit Diethylenglykol gefolgt von einer Umsetzung mit Ethylenoxid;
≥ 15 Massen-% bis ≤ 40 Massen-%, bevorzugt ≥ 20 Massen-% bis ≤ 30 Massen-% Tris(2-chlorisopropyl)phosphat (TCPP);
≥ 5 Massen-% bis ≤ 20 Massen-%, bevorzugt ≥ 10 Massen-% bis ≤ 20 Massen-%, eines Polyethers mit einer OH-Zahl von ≥ 25 mg KOH/g bis ≤ 30 mg KOH/g (DIN 53240), hergestellt durch Umsetzung von Propylenglykol mit Ethylenoxid und Propylenoxid;
≥ 5 Massen-% bis ≤ 15 Massen-%, bevorzugt ≥ 10 Massen-% bis ≤ 15 Massen-%, eines Polyethers mit einer OH-Zahl von ≥ 370 mg KOH/g bis ≤ 390 mg KOH/g (DIN 53240), hergestellt durch Umsetzung eines Gemisches von Saccharose, Propylenglykol und Monoethylenglykol mit Propylenoxid;
sowie > 1 Massen-% bis ≤ 5 Massen-%, bevorzugt ≥ 1,5 Massen-% bis ≤ 4 Massen-%, eines Polyethersiloxans als Schaumstabilisator.

In einer weiteren Ausführungsform des Verfahrens ist das Dicarbonsäureäquivalent in der Herstellung des Ester-Polyetherpolyols **A1a** ausgewählt aus der Gruppe bestehend aus Adipinsäure, Glutarsäure, Phthalsäure, Phthalsäureanhydrid, Terephthalsäure und Isophthalsäure; der mehrwertige Alkohol ist ausgewählt aus der Gruppe bestehend aus Ethlyenglykol, Diethlyenglykol, Sorbit und Sucrose; und die Isocyanatkomponente **B** ist ausgewählt aus der Gruppe bestehend aus: Diisocyanate der Diphenylmethanreihe, Polyisocyanate der Diphenylmethanreihe, Prepolymere aus Polyisocyanaten der Diphenylmethanreihe und Polyolen.

In einer weiteren Ausführungsform des Verfahrens umfasst die Polyolzusammensetzung **A1** weiterhin einen Polyetherpolyol **A1b,** erhältlich durch Umsetzung eines difunktionellen Alkohols mit Ethylenoxid und/oder Propylenoxid; und/oder einen Polyetherpolyol **A1c,** erhältlich durch Umsetzung eines Zuckers, eines ersten difunktionellen Alkohols und eines zweiten, vom ersten difunktionellen Alkohol verschiedenen difunktionellen Alkohols mit Ethylenoxid und/oder Propylenoxid.

Vorzugsweise hat das Polyol **A1b** eine OH-Zahl von ≥ 20 mg KOH/g bis ≤ 50 mg KOH/g (DIN 53240) und wird durch Umsetzung von 1,2-Propylenglykol mit Ethylenoxid und Propylenoxid hergestellt.

Es ist weiterhin bevorzugt, dass das Polyol **A1c** eine OH-Zahl von ≥ 350 mg KOH/g bis ≤ 400 mg KOH/g (DIN 53240) aufweist und durch Umsetzung von Sucrose, 1,2-Propylenglykol und Monoethylenglykol mit Propylenoxid hergestellt wird.

In einer weiteren Ausführungsform ist das physikalische Treibmittel (iii) b2) ausgewählt ist aus der Gruppe bestehend aus n-Pentan, Cyclopentan und Isopentan.

In einer weiteren Ausführungsform wird die Verschäumung bei einem Index (das molare Verhältnis der Isocyanatgruppen zu den gegenüber Isocyanatgruppen reaktiven Wasserstoffatomen multipliziert mit 100) von ≥ 180 bis ≤ 500 durchgeführt. Vorzugsweise beträgt der Index ≥ 220 bis ≤ 360 und mehr bevorzugt ≥ 270 bis ≤ 350.

In einer weiteren Ausführungsform umfasst die Treibmittelkomponente **A2:**
a2) Ameisensäure in einem molaren Anteil zwischen ≥ 5 mol-% und ≤ 20 mol-%,
b2) wenigstens ein physikalisches Treibmittel in einem molaren Anteil zwischen > 60 mol-% und ≤ 75 mol-%,
c2) Wasser in einem molaren Anteil zwischen > 5 mol-% und ≤ 35 mol-%,
wobei der molare Anteil von a2), b2) und c2) jeweils auf 100 mol-% **A2** bezogen ist.

Vorzugsweise beträgt der angegebene Ameisensäuregehalt ≥ 5 mol-% bis ≤ 18 mol-% und mehr bevorzugt ≥ 8 mol-% bis ≤ 16 mol-%. Der angegebene Wassergehalt beträgt vorzugsweise > 7 mol-% bis ≤ 35 mol-% und mehr bevorzugt ≥ 9 mol-% bis ≤ 32 mol-%.

In einer weiteren Ausführungsform erfolgt die Verschäumung von (i) bis (v) an einem Substrat **D,** sodass ein Verbundelement **E** umfassend den Polyurethan-Polyisocyanurat-Hartschaumstoff **C** und das Substrat **D** erhalten wird.

Die Herstellung der PUR-/PIR-Verbundelemente erfolgt vorzugsweise nach dem Fachmann bekannten Einstufenverfahren, bei dem die Reaktionskomponenten kontinuierlich miteinander zur Reaktion gebracht werden und dann anschließend durch Zuhilfenahme maschineller Einrichtungen im Hochdruck- oder Niederdruckverfahren nach Austrag auf ein Transportband zur Aushärtung gebracht werden. Beispiele sind in G. Oertel (Hrsg.) "Kunststoff-Handbuch", Band VII, Carl Hanser Verlag, 3. Auflage, München 1993, S. 261 ff beschrieben.

Wie bereits erwähnt ist ein besonderer Vorteil der erfindungsgemäßen Verbundelemente ist die verbesserte Haftung des Schaums an dem Substrat.

Das Substrat **D** kann eine untere Deckschicht und eine obere Deckschicht umfassen und (i) bis (v) werden zwischen diesen Deckschichten verschäumt, so dass ein Deckschicht-Hartschaum-Sandwichelement umfassend zwei Deckschichten und eine dazwischen liegende Hartschaumschicht erhalten wird.

Vorzugsweise ist das Substrat **D** aus wenigstens einem Material ausgewählt aus der Gruppe bestehend aus Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte.

Es ist weiterhin bevorzugt, dass kein Haftvermittler zwischen der oberen Deckschicht und der Hartschaumschicht und/oder kein Haftvermittler zwischen der unteren Deckschicht und der Hartschaumschicht eingesetzt wird. Beispiele für Haftvermittler, die vermieden werden können, sind beispielsweise Einkomponentensysteme auf der Basis von Polyurethan wie NCO-Gruppen enthaltende Präpolymere. Weitere mögliche Einkomponentensysteme basieren auf Polychloropren, Epoxid oder Polyvinylacetat. Der zu vermeidende Haftvermittler kann auch aus einem Mehrkomponentensystem, bevorzugt aus einem Zweikomponentensystem aufgebaut sein. Beispiele hierfür sind PUR-Systeme.

Die vorliegende Erfindung betrifft ebenfalls einen Polyurethan-Polyisocyanurat-Hartschaumstoff **C,** erhältlich nach einem Verfahren gemäß der vorliegenden Erfindung. Vorzugsweise beträgt dessen Dichte (DIN EN ISO 3386-1-98) zwischen > 36 kg/m³ und ≤ 45 kg/m³ und mehr bevorzugt ≥ 37 kg/m³ bis ≤ 42 kg/m³.

Ein weiterer Aspekt der vorliegenden Erfindung ist die Verwendung des erfindungsgemäßen Polyurethan-Polyisocyanurat-Hartschaumstoffs **C** zur Herstellung von Deckschicht-Hartschaum-S andwichelementen.

Die Erfindung betrifft schließlich auch ein Deckschicht-Hartschaum-Sandwichelement, erhältlich nach einem Verfahren gemäß der vorliegenden Erfindung.

### Beispiele

Die vorliegende Erfindung soll anhand der nachfolgenden Beispiele näher beschrieben werden, ohne jedoch hierauf beschränkt zu sein. Die Angabe "Teile" in den Rezepturen bezieht sich auf GewichtsTeile. OH-Zahlen sind in mg KOH/g (DIN 53240) angegeben.

A- und B-Komponenten wurden in einem Hochdruckmischkopf vermischt und in bekannter Weise mittels einer oszillierenden Gießharke in einem kontinuierlich betriebenen Doppeltransportband auf eine flexible Deckschicht, bestehend aus 50 µm starker Aluminiumfolie, aufgetragen. Die obere Deckschicht bestand aus demselben Material. Die Bandgeschwindigkeit betrug für alle Beispiele 5,6 m/min.

Als Aktivatoren kamen in allen Beispielen Kaliumacetat, Dimethylcyclohexylamin (DMCHA) und Pentamethyldiethylentriamin (PMDETA) zum Einsatz.

Die Ermittlung der Haftfestigkeiten an der Oberseite erfolgte senkrecht zur Schäumrichtung an Prüfkörpern von 100 x 100 x 10 mm. Auf die obere Deckschicht und auf die gegenüberliegende Seite wurden Stempel aufgeklebt, über die anschließend mit einer Geschwindigkeit von 5 mm/min eine Zugspannung erzeugt wurde. Die beim Versagen des Verbundes ermittelte Spannung in N/mm² bezeichnet die Haftung an der Elementoberseite.

### Beispiel 1 (Vergleichsbeispiel):

### Elementdicke: 105 mm

Index: 311
A-Komponente:
   40 Teile Esterether mit OH-Zahl 300, hergestellt durch Veresterung von Phthalsäureanhydrid mit Diethylenglykol und Umsetzung des Reaktionsproduktes mit Ethylenoxid
   16,1 Teile eines Polyethers mit OH-Zahl 28, hergestellt durch Umsetzung von 1,2-Propylenglykol mit Ethylenoxid und Propylenoxid
   12,3 Teile eines Polyethers mit OH-Zahl 380, hergestellt durch Umsetzung eines Gemisches von Sucrose, 1,2-Propylenglykol und Monoethylenglykol mit Propylenoxid
   25,6 Teile Flammschutzmittel (Trischlorisopropylphosphat, TCPP)
   0,8 Teile Wasser
   2,6 Teile siliconhaltiger Stabilisator
   2,6 Teile eines Esters aus Phthalsäureanhydrid und Diethylenglykol mit OH-Zahl 795 und Säurezahl 100. Diese Komponente dient dazu, eine größere Menge an Aktivator zugeben zu können zur Verbesserung der Schaumeigenschaften. Würde man diese Komponente nicht hinzugeben, wäre die Aktivität des Schaumsystems bei gleicher Aktivatormenge zu hoch.
Treibmittel: 13,5 Teile n-Pentan
B-Komponente:
   200 Teile Desmodur® 44V70L (polymeres MDI, erhältlich von Bayer Material Science AG)

### Beispiel 2 (erfindungsgemäß, 1 Teil Ameisensäure):

Elementdicke: 105 mm
Index: 316
A-Komponente:
   41,6 Teile Esterether mit OH-Zahl 300, hergestellt durch Veresterung von Phthalsäureanhydrid mit Diethylenglykol und Umsetzung des Reaktionsproduktes mit Ethylenoxid
   16,1 Teile eines Polyethers mit OH-Zahl 28, hergestellt durch Umsetzung von 1,2-Propylenglykol mit Ethylenoxid und Propylenoxid
   12,3 Teile eines Polyethers mit OH-Zahl 380, hergestellt durch Umsetzung eines Gemisches von Sucrose, 1,2-Propylenglykol und Monoethylenglykol mit Propylenoxid
   25,6 Teile Flammschutzmittel (Trischlorisopropylphosphat, TCPP)
   2,6 Teile siliconhaltiger Stabilisator
   Treibmittel:12,1 Teile n-Pentan
   Co-Treibmittel: 0,8 Teile Wasser
   Ameisensäure (99%ig): 1,0 Teile
B-Komponente:
   210 Teile Desmodur® 44V70L (polymeres MDI, erhältlich von Bayer Material Science AG)

### Beispiel 3 (erfindungsgemäß; 1,5 Teile Ameisensäure):

Elementdicke: 105 mm
Index: 312
A-Komponente: analog Beispiel 2, anstatt 1,0 nun 1,5 Teile Ameisensäure und anstatt 41,6 Teile Esterether nun 41,2 Teile.
Treibmittel: 10,1 Teile n-Pentan
B-Komponente:
   215 Teile Desmodur® 44V70L (polymeres MDI, erhältlich von Bayer Material Science AG)

Die Ermittlung der Haftfestigkeiten lieferte die folgenden Ergebnisse:

| **Beispiel** | **Teile Ameisensäure in A-Komponente (99%ig)** | **Kaliumacetat (Teile)** | **DMCHA (Teile)** | **PMDETA (Teile)** | **Haftung Oberseite (N/mm²)** |
|---|---|---|---|---|---|
| 1 | 0 | 0,88 | 0,3 | 0,14 | 0,198 |
| 2 | 1,0 | 1,03 | 0,3 | 0,14 | 0,276 |
| 3 | 1,5 | 1,10 | 0,3 | 0,14 | 0,423 |

## Patentansprüche

1. Verfahren zur Herstellung eines Polyurethan-Polyisocyanurat-Hartschaumstoffs **C** durch Verschäumung
(i) einer Polyol-Zusammensetzung **A1** umfassend
wenigstens ein Ester-Polyetherpolyol **A1a** mit einer Hydroxylzahl zwischen 200 mg KOH/g und 500 mg KOH/g und einer durchschnittlichen OH-Funktionalität zwischen 1,5 und 4,0, erhältlich durch
a1) Umsetzung wenigstens eines Dicarbonsäureäquivalents mit wenigstens einem mehrwertigen Alkohol, und
b1) Alkoxylierung des in a1) erhaltenen Umsetzungsproduktes mit wenigstens einem Epoxid
mit
(ii) einer Isocyanatkomponente **B,**
in Gegenwart von
(iii) einer Treibmittelkomponente **A2** umfassend
a2) Ameisensäure in einem molaren Anteil zwischen ≥ 5 mol-% und ≤ 40 mol-%,
b2) physikalische Treibmittel in einem molaren Anteil zwischen ≥ 50 mol-% und ≤ 85 mol-%,
c2) Wasser in einem molaren Anteil zwischen ≥ 5 mol-% und ≤ 45 mol-%, wobei der molare Anteil von a2), b2) und c2) jeweils auf 100 mol-% **A2** bezogen ist,
(iv) wenigstens eines Katalysators **A3** und
(v) wenigstens eines Schaumstabilisators **A4.**

2. Verfahren nach Anspruch 1, bei dem der Massenanteil der Summe aller Ester-Polyetherpolyole **A1a** ≥ 30 Massen-% bis ≤ 100 Massen-%, bezogen auf die Gesamtmasse von **A1,** beträgt.

3. Verfahren nach Anspruch 1 oder 2, bei dem das Dicarbonsäureäquivalent in der Herstellung des Ester-Polyetherpolyols **A1a** ausgewählt ist aus der Gruppe bestehend aus
Adipinsäure, Glutarsäure, Phthalsäure, Phthalsäureanhydrid, Terephthalsäure und Isophthalsäure,
und bei dem der mehrwertige Alkohol ausgewählt ist aus der Gruppe bestehend aus
Ethlyenglykol, Diethlyenglykol, Sorbit und Sucrose,
und bei dem die Isocyanatkomponente **B** ausgewählt ist aus der Gruppe bestehend aus
Diisocyanate der Diphenylmethanreihe, Polyisocyanate der Diphenylmethanreihe, Prepolymere aus Polyisocyanaten der Diphenylmethanreihe und Polyolen.

4. Verfahren nach einem der Ansprüche 1 bis 3, bei dem die Polyolzusammensetzung **A1** weiterhin umfasst:
einen Polyetherpolyol **A1b,** erhältlich durch Umsetzung eines difunktionellen Alkohols mit Ethylenoxid und/oder Propylenoxid; und/oder
einen Polyetherpolyol **A1c,** erhältlich durch Umsetzung eines Zuckers, eines ersten difunktionellen Alkohols und eines zweiten, vom ersten difunktionellen Alkohol verschiedenen difunktionellen Alkohols mit Ethylenoxid und/oder Propylenoxid.

5. Verfahren nach einem der Ansprüche 1 bis 4, bei dem das physikalische Treibmittel (iii) b2) ausgewählt ist aus der Gruppe bestehend aus
n-Pentan, Cyclopentan und Isopentan.

6. Verfahren nach einem der Ansprüche 1 bis 5, bei dem die Verschäumung bei einem Index von ≥ 180 bis ≤ 500 durchgeführt wird.

7. Verfahren nach einem der Ansprüche 1 bis 6, bei dem die Treibmittelkomponente **A2** umfasst:
a2) Ameisensäure in einem molaren Anteil zwischen > 5 mol-% und ≤ 20 mol-%,
b2) wenigstens ein physikalisches Treibmittel in einem molaren Anteil zwischen ≥ 60 mol-% und ≤ 75 mol-%,
c2) Wasser in einem molaren Anteil zwischen ≥ 5 mol-% und ≤ 35 mol-%,
wobei der molare Anteil von a2), b2) und c2) jeweils auf 100 mol-% **A2** bezogen ist.

8. Verfahren nach einem der Ansprüche 1 bis 7, bei dem die Verschäumung von (i) bis (v) an einem Substrat **D** erfolgt, so dass ein Verbundelement **E** umfassend den Polyurethan-Polyisocyanurat-Hartschaumstoff **C** und das Substrat **D** erhalten wird.

9. Verfahren nach Anspruch 8, bei dem das Substrat **D** eine untere Deckschicht und eine obere Deckschicht umfasst und (i) bis (v) zwischen diesen Deckschichten verschäumt werden, sodass ein Deckschicht-Hartschaum-Sandwichelement umfassend zwei Deckschichten und eine dazwischen liegende Hartschaumschicht erhalten wird.

10. Verfahren nach Anspruch 8 oder 9, bei dem das Substrat **D** aus wenigstens einem Material ausgewählt ist aus der Gruppe bestehend aus Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte.

11. Verfahren nach Anspruch 9 oder 10, bei dem kein Haftvermittler zwischen der oberen Deckschicht und der Hartschaumschicht und/oder kein Haftvermittler zwischen der unteren Deckschicht und der Hartschaumschicht eingesetzt wird.

12. Polyurethan-Polyisocyanurat-Hartschaumstoff **C,** erhältlich nach einem Verfahren gemäß einem der Ansprüche 1 bis 7.

13. Polyurethan-Polyisocyanurat-Hartschaumstoff **C** gemäß Anspruch 12, bei dem die Dichte zwischen ≥ 36 kg/m³ und ≤ 45 kg/m³ beträgt.

14. Verwendung des Polyurethan-Polyisocyanurat-Hartschaumstoffs **C** gemäß Anspruch 12 oder 13 zur Herstellung von Deckschicht-Hartschaum-Sandwichelementen.

15. Deckschicht-Hartschaum-Sandwichelement, erhältlich nach einem Verfahren gemäß einem der Ansprüche 8 bis 11.

## Claims

1. Process for the production of a rigid polyurethane-polyisocyanurate foam **C** via foaming
(i) of a polyol composition **A1** comprising
at least one ester-polyether polyol **A1a** with hydroxy number from 200 mg KOH/g to 500 mg KOH/g and with average OH functionality from 1.5 to 4.0, obtainable via
a1) reaction of at least one dicarboxylic acid equivalent with at least one polyhydric alcohol, and
b1) alkoxylation, with at least one epoxide, of the reaction product obtained in a1)
with
(ii) an isocyanate component **B,**
in the presence of
(iii) a blowing agent component **A2** comprising
a2) a molar proportion of from ≥ 5 mol% to ≤ 40 mol% of formic acid,
b2) a molar proportion of from ≥ 50 mol% to ≤ 85 mol% of physical blowing agents,
c2) a molar proportion of from ≥ 5 mol% to ≤ 45 mol% of water,
where the molar proportion a2), b2) and c2) is in each case based on 100 mol% of **A2,**
(iv) at least one catalyst **A3** and
(v) at least one foam stabilizer **A4.**

2. Process according to Claim 1, in which the proportion by mass of the entirety of all of the ester-polyether polyols **A1a** is from ≥ 30% by mass to ≤ 100% by mass, based on the total mass of **A1.**

3. Process according to Claim 1 or 2, in which the dicarboxylic acid equivalent in the production of the ester-polyether polyol **A1a** is selected from the group consisting of
adipic acid, glutaric acid, phthalic acid, phthalic anhydride, terephthalic acid and isophthalic acid,
and in which the polyhydric alcohol is selected from the group consisting of
ethylene glycol, diethylene glycol, sorbitol and sucrose,
and in which the isocyanate component **B** is selected from the group consisting of
diisocyanates of the diphenylmethane group, polyisocyanates of the diphenylmethane group, prepolymers made of polyisocyanates of the diphenylmethane group and polyols.

4. Process according to any of Claims 1 to 3, in which the polyol composition **A1** moreover comprises:
a polyether polyol **A1b,** obtainable via reaction of a dihydric alcohol with ethylene oxide and/or propylene oxide; and/or
a polyether polyol **A1c,** obtainable via reaction of a sugar, a first dihydric alcohol and a second dihydric alcohol differing from the first dihydric alcohol with ethylene oxide and/or propylene oxide.

5. Process according to any of Claims 1 to 4, in which the physical blowing agent (iii) b2) is selected from the group consisting of
n-pentane, cyclopentane and isopentane.

6. Process according to any of Claims 1 to 5, in which the foaming is carried out at an index of from ≥ 180 to ≤ 500.

7. Process according to any of Claims 1 to 6, in which blowing agent component **A2** comprises:
a2) a molar proportion of from ≥ 5 mol% to ≤ 20 mol% of formic acid,
b2) a molar proportion of from ≥ 60 mol% to ≤ 75 mol% of at least one physical blowing agent,
c2) a molar proportion of from ≥ 5 mol% to ≤ 35 mol% of water,
where the molar proportion a2), b2) and c2) is in each case based on 100 mol% of **A2.**

8. Process according to any of Claims 1 to 7, in which the foaming of (i) to (v) takes place in contact with a substrate **D,** thus giving a composite element **E** comprising the rigid polyurethane-polyisocyanurate foam **C** and the substrate **D.**

9. Process according to Claim 8, in which the substrate **D** comprises a lower outer layer and an upper outer layer and (i) to (v) are foamed between these outer layers, thus giving an outer-layer-rigid-foam sandwich element comprising two outer layers and, situated therebetween, a rigid foam layer.

10. Process according to Claim 8 or 9, in which the substrate **D** is selected from at least one material from the group consisting of aluminium, steel, bitumen, paper, a mineral non-woven fabric, a non-woven fabric comprising organic fibres, a plastics sheet, a plastics film and/or a timber board.

11. Process according to Claim 9 or 10, in which no adhesion promoter is used between the upper outer layer and the rigid foam layer and/or no adhesion promoter is used between the lower outer layer and the rigid foam layer.

12. Rigid polyurethane-polyisocyanurate foam **C,** obtainable by a process according to any of Claims 1 to 7.

13. Rigid polyurethane-polyisocyanurate foam **C** according to Claim 12, the density of which is from ≥ 36 kg/m³ to ≤ 45 kg/m³.

14. The use of the rigid polyurethane-polyisocyanurate foam **C** according to Claim 12 or 13 for the production of outer-layer-rigid-foam sandwich elements.

15. Outer-layer-rigid-foam sandwich element, obtainable by a process according to any of Claims 8 to 11.

## Revendications

1. Procédé pour la fabrication d'une mousse dure de polyuréthane-polyisocyanurate C par moussage
(i) d'une composition de polyol A1
au moins un ester-polyétherpolyol A1a présentant un indice d'hydroxyle entre 200 mg de KOH/g et 500 mg de KOH/g et une fonctionnalité OH moyenne entre 1,5 et 4,0, pouvant être obtenu par
a1) transformation d'au moins un équivalent d'acide dicarboxylique avec au moins un alcool polyvalent, et
b1) alcoxylation du produit de transformation obtenu dans a1) avec au moins un époxyde
avec
(ii) un composant isocyanate B,
en présence de
(iii) un composant d'agent gonflant A2 comprenant
a2) de l'acide formique en une proportion molaire entre ≥ 5% en mole et ≤ 40% en mole,
b2) un agent gonflant physique en une proportion molaire entre ≥ 50% en mole et ≤ 85% en mole,
c2) de l'eau en une proportion molaire entre ≥ 5% en mole et ≤ 45% en mole,
la proportion molaire d'a2), de b2) et de c2) se rapportant à chaque fois à 100% en mole d'A2,
(iv) au moins un catalyseur A3 et
(v) au moins un stabilisant de mousse A4.

2. Procédé selon la revendication 1, dans lequel la proportion massique de la somme de tous les ester-polyétherpolyols A1a est ≥ 30% en masse à ≤ 100% en masse, par rapport à la masse totale d'A1.

3. Procédé selon la revendication 1 ou 2, dans lequel l'équivalent d'acide dicarboxylique dans la préparation de l'ester-polyétherpolyol A1a est choisi dans le groupe constitué par l'acide adipique, l'acide glutarique, l'acide phtalique, l'anhydride de l'acide phtalique, l'acide téréphtalique et l'acide isophtalique et dans lequel l'alcool polyvalent est choisi dans le groupe constitué par l'éthylèneglycol, le diéthylèneglycol, le sorbitol et le saccharose et dans lequel le composant isocyanate B est choisi dans le groupe constitué par les diisocyanates de la série diphénylméthane, les polyisocyanates de la série diphénylméthane, les prépolymères de polyisocyanates de la série diphénylméthane et de polyols.

4. Procédé selon l'une quelconque des revendications 1 à 3, dans lequel la composition de polyol A1 comprend en outre :
un polyétherpolyol A1b, pouvant être obtenu par transformation d'un alcool difonctionnel avec de l'oxyde d'éthylène et/ou de l'oxyde de propylène ; et/ou un polyétherpolyol A1c, pouvant être obtenu par transformation d'un sucre, d'un premier alcool difonctionnel et d'un deuxième alcool difonctionnel, différent du premier alcool difonctionnel, avec de l'oxyde d'éthylène et/ou de l'oxyde de propylène.

5. Procédé selon l'une quelconque des revendications 1 à 4, dans lequel l'agent gonflant physique (iii) b2) est choisi dans le groupe constitué par le n-pentane, le cyclopentane et l'isopentane.

6. Procédé selon l'une quelconque des revendications 1 à 5, dans lequel le moussage est réalisé à un indice de ≥ 180 à ≤ 500.

7. Procédé selon l'une quelconque des revendications 1 à 6, dans lequel le composant d'agent gonflant A2 comprend :
a2) de l'acide formique en une proportion molaire entre ≥ 5% en mole et ≤ 20% en mole,
b2) au moins un agent gonflant physique en une proportion molaire entre ≥ 60% en mole et ≤ 75% en mole,
c2) de l'eau en une proportion molaire entre ≥ 5% en mole et ≤ 35% en mole,
la proportion molaire d'a2), de b2) et de c2) se rapportant à chaque fois à 100% en mole d'A2.

8. Procédé selon l'une quelconque des revendications 1 à 7, dans lequel le moussage de (i) à (v) a lieu sur un substrat D, de manière à obtenir un élément composite E comprenant la mousse dure de polyuréthane-polyisocyanurate C et le substrat D.

9. Procédé selon la revendication 8, dans lequel le substrat D comprend une couche de recouvrement inférieure et une couche de recouvrement supérieure et (i) à (v) sont moussés entre ces couches de recouvrement, de manière à obtenir un élément sandwich couche de recouvrement-mousse dure, comprenant deux couches de recouvrement et une couche de mousse dure située entre celles-ci.

10. Procédé selon la revendication 8 ou 9, dans lequel le substrat D en au moins un matériau est choisi dans le groupe constitué par l'aluminium, l'acier, le bitume, le papier, un non-tissé minéral, un non-tissé comprenant des fibres organiques, une plaque en matériau synthétique, une feuille en matériau synthétique et/ou une plaque en bois.

11. Procédé selon la revendication 9 ou 10, dans lequel on n'utilise pas de promoteur d'adhérence entre la couche de recouvrement supérieure et la couche de mousse dure et/ou pas de promoteur d'adhérence entre la couche de recouvrement inférieure et la couche de mousse dure.

12. Mousse dure de polyuréthane-polyisocyanurate C, pouvant être obtenue selon un procédé selon l'une quelconque des revendications 1 à 7.

13. Mousse dure de polyuréthane-polyisocyanurate C selon la revendication 12, dans laquelle la densité est située entre ≥ 36 kg/m³ et ≤ 45 kg/m³.

14. Utilisation de la mousse dure de polyuréthane-polyisocyanurate C selon la revendication 12 ou 13 pour la fabrication d'éléments sandwich de couche de recouvrement-mousse dure.

15. Élément sandwich couche de recouvrement-mousse dure, pouvant être obtenu selon un procédé selon l'une quelconque des revendications 8 à 11.
